# EUROPEAN PATENT APPLICATION

(11) **EP 2 095 913 A1**
(43) Date of publication of application: **02.09.2009**
(21) Application number: 09250244.2
(22) Date of filing: 29.01.2009
(51) Int. Cl.: B26B 17/02, F16L 55/18

(54) **Hand tool**

(30) Priority: 29.02.2008 GB 0803728
(71) Applicant: Todays Tools Limited, Newcastle Staffordshire ST5 7RH (GB)
(72) Inventor: Herriott, Malcolm, Newcastle, Staffordshire ST5 7RH (GB); Scrivens, Terrance, Newcastle, Staffordshire ST5 7RH (GB)
(74) Representative: Bhimani, Alan

(57) **Abstract**

A tool for removal of compression fittings from pipes comprising: a pair of handles (2, 3) having a common fulcrum (4); two jaw members (5, 6), each having a active portion pivotally mounted to a respective handle; and a crossbar (7) pivotally mounted to the jaw members (5, 6). One of the jaw members (6) has an active portion which comprises a smooth rounded surface anvil and the other jaw member (5) has an active portion which comprises a bladed section (5a). The jaw members (5, 6) are arranged and spaced apart from each other at the crossbar (7).

## Description

This invention relates to a hand tool and in particular a hand tool for removing compression fittings from pipes such as compression fittings used in the plumbing industry.

As will be well appreciated when fittings are secured to pipes a collar is fitted to the pipe adjacent the end of the pipe to help locate and secure the fitting to the pipe. This is commonly known as a compression fitting.

Commonly in the plumbing industry the pipes have been copper and the fittings such as elbow bends or valves are made of brass. The compression fittings are therefore commonly made from brass or copper also and therefore can be easily deformed to fit to the pipe, for example by crimping. Once fitted you would normally expect the compression to last the length of service of the pipe.

However because of the material of the fitting and even more so the overzealous nature of the average workman compression fittings are often damaged during the fitting to the pipe or by over tightening of the lock nut for the fitting during fitting of the fittings to the pipe. There is therefore a need to enable compression fittings to be replaced.

In order to replace a compression fitting without removing a small section of pipe the fitting has to carefully cut and forced apart without damaging the pipe itself. If this is not carried out skilfully and with care the pipe could be damaged so requiring replacement of the pipe as a whole or a section of the pipe with the fitting of another fitting such as a straight line connection.

At present there are no tools in the market place for the removal or replacement of compressions fittings. Plumbers and other tradesman have to use the tools available and improvise.

The present invention is concerned with eliminating this problem or in the very least alleviating the problem

In accordance with the present invention there is provided a tool for removal of compression fittings from pipes, said tool includes a pair of handles having a common fulcrum, two jaw members each having a active portion one pivotally mounted to each handle and a crossbar pivotally mounted to the jaw members wherein one of the jaw members has an active portion which comprises a smooth rounded surface anvil and the other jaw member has an active portion which comprises a bladed section and the jaw members are arranged and the jaw members are spaced apart from each other at the crossbar.

The hand tool of the present invention operated and used by inserting the active portion of one of the jaw members into the pipe so that the anvil portion of said jaw member engages with the inner surface of the pipe and the bladed section of the other jaw member is disposed over the compression fitting to be removed. The hand tool is operated and the anvil portion bears against the inner surface of the pipe as the bladed section bears against and cuts the compression fitting.

The tool of the present invention therefore comprises a relative simply operated and small hand tool that can cleanly and smoothly allow for the removal of compression fittings. The provision of one active section to bear against a surface and the second active section to cut the fitting away means that the damage to the pipe is maintained at a minimal level so the chances that a pipe will have to be replaced because of damage to the pipe during the removal of the compression fitting are reduced to almost nothing.

In normal operation of the hand tool the blade will be deployed to cut the compression fitting as the handles are squeezed together and the anvil will be deployed to abut against the internal surface of the pipe from which the compression fitting is being cut.

The curvature of the convex shaping to the anvil is set so that it can fit within all the gauges of pipe that a plumber is likely to encounter. Consequently it is sized to be located in the smallest sized pipe and in this case the surface of the anvil will substantially correspond to the surface of the pipe. With large diameter pipes whilst the surface of the anvil does not correspond to the surface of the pipe there are no sharp edges on the anvil that can dig into and damage the surface of the pipe.

The jaw members are spaced apart at the cross bar. The amount of the separation employed is set to met the particular criteria for the use of the particular tool, i.e. the thickness of the pipe wall from which the compression fitting is being removed. As will be understood by those skilled in the art in order to maintain any potential for damage to the pipe in the removal of the compression fitting the bladed section should be parallel with the pipe surface as it contacts the pipe surface. Therefore the separation of the jaw members at the cross bar should be set at the thickness of the pipe wall.

However it should also be remembered that if the pipe wall is thicker than the separation then this could interfere with the operation of the tool, and if the separation is greater than the thickness of the pipe then the nose of the bladed section could dig into the pipe. In both instances the pipe can be damaged and it may not be possible to remove the compression fitting. Fortunately the pipe wall thickness for all plumbing pipes is standard and constant. Therefore the separation can be set in the factory so the tool can be used on all pipe sizes in the plumbing industry.

It should also be remembered that whilst the tool has been developed with the plumbing industry in mind the tool will have application and use outside of this.

The angle between the jaw members is in the range of between 1 and 5 degrees, and most preferably in the range between 1 and 3 degrees when the angle is read from the end of the jaw members remotest from the fulcrums.

The present invention is suited for the cutting and removal of compression fittings from copper/brass pipe work or plastic pipe work.

The length of the jaw members is not critical to the operation of the invention. However, the longer the length the more difficult it is for the operation of them to be accurately controlled. Preferably the length of the jaw members is set to be sufficient to reach the depth of set adopted for any piping system.

The invention will now be illustrated by way description of an example made in accordance with the present invention with reference to the accompanying drawings, in which:
Figure 1 shows a representation of a hand tool made in accordance with the present invention; and
Figure 2 shows a representation of a fitted compression fitting suitable for removal using the hand tool of the present invention.

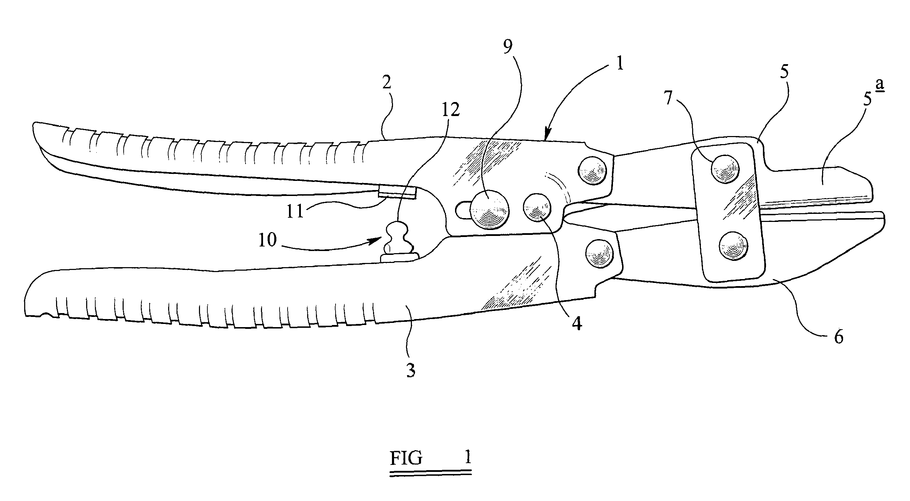

Now referring to Figure 1 of the drawings there is shown a basic hand tool 1 made in accordance with the present invention. The hand tool 1 to be described is intended for use in the plumbing trade for the removal of compression fittings from pipes in situ. It is intended for use in all instances including in tight spaces in a simple and effective manner.

The hand tool 1 comprises a pair of handles 2, 3; a pair of jaw members 5,6 each of which jaw members 5,6 is pivotally attached to one end of a respective handle 2,3 at its end; and a cross bar 7 which is pivotally attached to each of the jaw members 5,6 and which holds the jaw members in a slightly spaced apart relationship. The pivotal connection of the handles 2,3 to the respective jaw members 5,6 is at a point between the common fulcrum 4 and the pivotal connection of the cross bar 7 to the jaw members.

The handles 2,3 in this example comprise a hollow construction and each of the handles has an overlapping section and these sections of the respective handles overlap each other to provide a common section. In the common section the handles 2,3 have a common fulcrum 4.

The arrangement of the handles 2,3, jaw members 5,6 and the cross bar is such that as the remote ends of the handles are brought together, i.e. squeezed, the handles pivot about the common fulcrum 4 forcing the pivotal connections with the jaw members 5,6 outward and away from each other. This in turn causes the jaw members 5,6 to pivot about the pivot connection to the cross bar 7 and causes the remote ends of the jaw members towards each other.

As will be well appreciated the jaw members are moved with a pivotal movement about separate fulcrums. The jaw members 5,6 are capable of movement with respect to each other through the situation where the separation between the jaw members is greater at the remote ends than at the crossbar 7, where the jaw members are parallel to each other, and then to the position where the separation is greater at the cross than at the remote ends. It will be well appreciated by those skilled in the plumbing trade and also the tool design trade, that due to the fact that the tool is intended for the removal of fittings from a pipe with minimal damage to the pipe this can be best achieved by having the jaw members pass through the parallel configuration at the point when the jaw members 5,6 both contact the surface of the pipe. Consequential as plumbing pipes tend to be manufactured with the same wall thickness the separation between the jaw members at the crossbar 7 is most effectively set at the wall thickness of the pipe.

An over exertion stop device 10 is provided which prevents the handles being overly pressured towards each other. This device 10 comprises a pad member 11 on the handle 2 and a pin 12 on the handle 3. The pad 11 and pin 12 are positioned and sized accordingly to have the desired effect and prevent the hand tool 1 from being squeezed so hard that the jaw members 5,6 are damaged by engagement with each other.

In addition a lock means 9 is provided adjacent the fulcrum 4. The lock means 9 comprises a pin that is located in grooves provided in the handles in this area. The pin can be moved to a position in the grooves where it allows the handles to open and closed with respect to each other to a degree which enables the hand tool1 to be properly operated and used and alternatively to a position where the handles are locked and located in the closed position. In the closed position the jaw members 5,6 abut against each other.

The jaw member 5 includes an elongated nose portion 5a which operates like an anvil or pressure applicator when the hand tool 1 is in use. The surface of the jaw member in this section 5a is provided with a rounded profile in order to enhance the operation of the tool 1. The rounded profile to this section means that this section of the tool will not dig in or damage the surface of any pipe it is deployed with respect to.

The jaw member 6 on the other hand has a cutting edge on the section that corresponds to the jaw section 5a.

The hand tool 1 is for use in the plumbing trade.

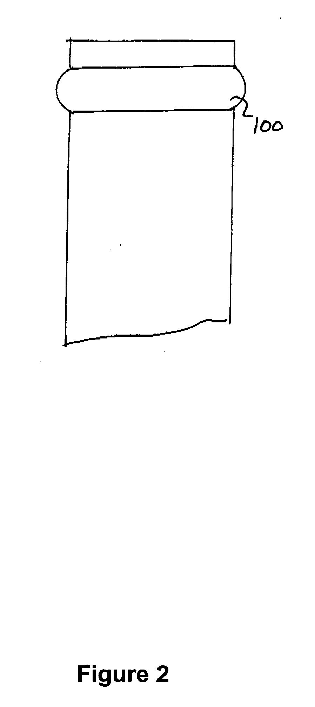

Now referring to Figure 2 of the drawings there is shown a compression fitting 100 fitted to a pipe. The compression fitting 100 is located and secured to the end of a pipe in the vicinity of the end of the pipe but spaced inwardly from said end. The compression fitting 100 generally comprises a band of brass, or alternatively copper, that is crimped down onto the end of the pipe to provide a stable base onto which a fitting, such as a valve, elbow or simple connection may be securely mounted.

Further because the compression fitting enables a secure fixing to be achieved the compression fitting provides means by which any leakage from the pipe can be easily controlled. In an ideal situation the compression fitting 100 will remain undamaged in the fitting and therefore even if the component that it has been provided for fails can be used for the fitting of a replacement component. However due to the fact that plumbers tend to be in a hurry or just have an overzealous nature when the fittings are fitted they are fitted to exuberantly and more often that not are damaged. They can then be further damaged during normal wear and tear a procedure that means they have to be refitted more often than desired.

It is the removal of this fitting that normally causes some problems, and as to now a suitable tool, which enables its easy and controlled removal, has been provided. The problem with re-fitting a compression fitting is actually in the removal of the old fitting.

Until the present invention there has not been a tool that enables the simple removal of the fitting. Consequently plumbers etc have had to compromise and use whatever means are available and to improvise. For example they may attempt to cut the fitting off and all too often the pipe is damaged as a result and the plumber ends up replacing the pipe as well as the fitting.

In use the hand tool 1 has the elongate section 5a of the jaw member 5 inserted into the pipe so that the bladed section of the jaw member 6 is disposed above the compression fitting to be removed. The handles 2,3 are then squeezed together and as described above the jaw members 5, 6 are moved closer to each other. The section 5a of the jaw member 5 thereby is brought into contact with the inside of the pipe and the bladed section of the jaw member 6 is brought into contact with the surface of the compression fitting. Then as further pressure is applied this is brought fully to bear against the compression fitting with the section 5a of the other jaw member bearing only against the inside of the pipe and not cutting or damaging this. The bladed section of the jaw member 6 thereby cuts into the compression fitting severing this and enabling its simple removal.

## Claims

1. A tool for removal of compression fittings from pipes comprising:
a pair of handles having a common fulcrum;
two jaw members, each having a active portion pivotally mounted to a respective handle;
and a crossbar pivotally mounted to the jaw members;
wherein:
one of the jaw members has an active portion which comprises a smooth rounded surface anvil and the other jaw member has an active portion which comprises a bladed section;
and the jaw members are arranged and spaced apart from each other at the crossbar.
